# EUROPEAN PATENT APPLICATION

(11) **EP 2 769 835 A1**
(43) Date of publication of application: **27.08.2014**
(21) Application number: 12841427.3
(22) Date of filing: 17.02.2012
(51) Int. Cl.: B29D 11/00, B29C 41/02

(54) **METHOD FOR MANUFACTURING A FILM FOR A 3D LENS**

(30) Priority: 19.10.2011 KR 20110106716
(71) Applicant: Lee, Sang Hwan, Bucheon-si, Gyeonggi-do 420-801 (KR); You, Byoung Ho, Goyang-si, Gyeonggi-do 410-708 (KR)
(72) Inventor: LEE, Sang Hwan, Gyeonggi-go, 420-801 (KR)
(74) Representative: Kloiber, Thomas
(86) International application number: PCT/KR2012/001212
(87) International publication number: WO 2013/058443

(57) **Abstract**

Disclosed is a method for manufacturing a 3D lens film for converting and displaying a 2D image into a 3D image, the method including: a tenth process of manufacturing a copper plate having a plurality of lenses intaglio-patterned on one surface thereof; a twelfth process of coating a transparent liquid resin coating agent on a surface of the intaglio-patterned copper plate; a fourteenth process of removing a liquid resin coating agent at portions other than a portion in which the plurality of intaglio-patterned lenses are disposed; and a sixteenth process of compressing a coating lens film 100 on a surface of the intaglio-patterned copper plate so that a plurality of coating lenses 101 are formed on one surface of the coating lens film 100 to correspond to the patterning.

## Description

### [Technical Field]

The present invention relates to a method for manufacturing a three dimensional lens film, and particularly, to a method for manufacturing a 3D lens film for converting and displaying a 2D image into a 3D image.

### [Background Art]

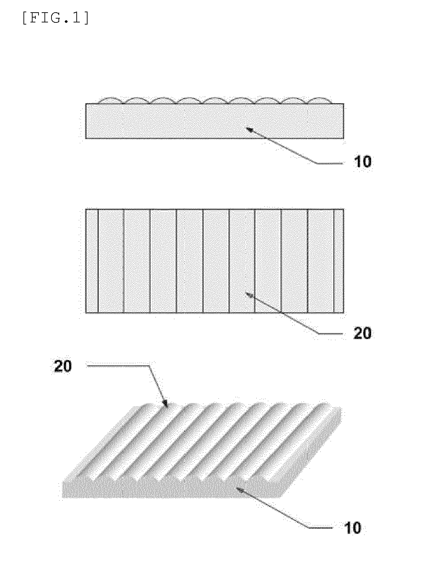

FIG. 1 is a diagram illustrating a cross-sectional view, a plan view, and a perspective view of a 3D lens film according to the related art, and the 3D lens film is configured of a plurality of lenses 20 that is formed on a lens film 10. In this case, the plurality of lenses 20 has a form in which a plurality of vinyl greenhouses is adjacent to each other.

However, a 3D lens sheet film according to the related art is produced only as a sheet and has a limited standard and a user directly needs to print the film only on a sheet to meet the defined number of lines of the 3D film, such that lamination with other printed matters cannot be performed.

Further, the 3D lens sheet film requires an accurate pint in the lens line of the sheet at the time of a printing operation and therefore may be produced by an accurate control using a precision instrument and has directivity, and therefore has many limitations and a high defective rate at the time of the printing operation due to a product standard.

In particular, products over 120 [lpi] among PET films are expensive and cannot be produced in a small quantity and therefore are a big burden on even specific users and are restrictively produced, and as a result are replaced with imported goods if necessary.

### [Disclosure]

### [Technical Problem]

The present invention is conceived to solve the aforementioned problem and an object of the present invention is to provide a method for manufacturing a 3D lens film for converting and displaying a 2D image into a 3D image.

In order to accomplish the object, according to an aspect of the present invention, provided is a method for manufacturing a 3D lens film, including: a tenth process of manufacturing a copper plate having a plurality of lenses intaglio-patterned on one surface thereof; a twelfth process of coating a transparent liquid resin coating agent on a surface of the intaglio-patterned copper plate; a fourteenth process of removing a liquid resin coating agent at portions other than a portion in which the plurality of intaglio-patterned lenses is disposed; and a sixteenth process of compressing a coating lens film 100 on a surface of the intaglio-patterned copper plate so that a plurality of coating lenses 101 is formed on one surface of the coating lens film 100 to correspond to the patterning.

In the tenth process, the intaglio-patterned copper plate may be manufactured using ferric chloride or copper chloride at 40°C to 50°C by wet etching.

The liquid resin coating agent may be kept at a viscosity of 10,000 to 12,000 Pa.s (kg/m.sec).

In the fourteenth process, the liquid resin coating agent may be removed in a state in which a doctor knife is kept at 40° to 45° with respect to a surface of the intaglio-patterned copper plate.

In the sixteenth process, the coating lens film 100 may be compressed on the surface of the copper plate by a roller type.

In the sixteenth process, the plurality of coating lenses 101 may be formed at 10 to 900 [lpi].

A side interval between the coating lenses 101 may be 5 µm to 10 µm.

### [Advantageous Effects]

According to the present invention, the 3D lens film can be directly printed as well as laminated with any printed matter for other usages and if necessary, adhesively coated to meet product usage and then laminated with a release paper so as to be directly attached to the images of all products, thereby diversely extending the product usage.

In addition, a thickness 122, a diameter 121, a radius 123, and the shape and arrangement of the coating lens 101 to meet the product usage can be variously configured, thereby providing optimal user selection.

### [Breif Description of Drawings]

FIG. 1 is a cross-sectional view, a plan view, and a perspective view of a 3D lens film according to the related art.
FIG. 2 is a cross-sectional view, a plan view, and a perspective view illustrating a method for manufacturing a 3D lens film according to an exemplary embodiment of the present invention.
FIG. 3 is a plan view of an arrangement of a coating lens that may be configured in the 3D lens film according to the exemplary embodiment of the present invention.
FIG. 4 is a cross-sectional view and a plan view of a shape of the coating lens that may be configured in the 3D lens film according to the exemplary embodiment of the present invention.
FIG. 5 is a cross-sectional view of a sectional standard of the coating lens that may be configured in the 3D lens film according to the exemplary embodiment of the present invention.
FIGS. 6 and 7 are cross-sectional views of a lamination of the 3D lens film according to the exemplary embodiment of the present invention.

### [Best Mode]

Hereinafter, exemplary embodiments according to the present invention will be described below in detail with reference to the accompanying drawings.

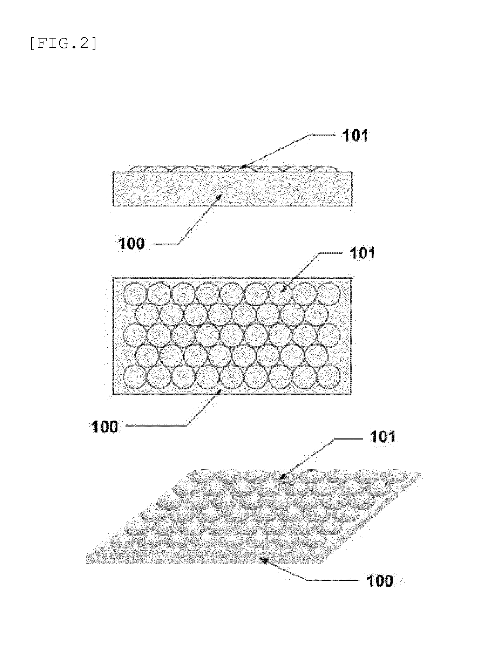

FIG. 2 is a cross-sectional view, a plan view, and a perspective view illustrating a method for manufacturing a 3D lens film according to an exemplary embodiment of the present invention and a plurality of coating lenses 101 is patterned on a coating lens film 100.

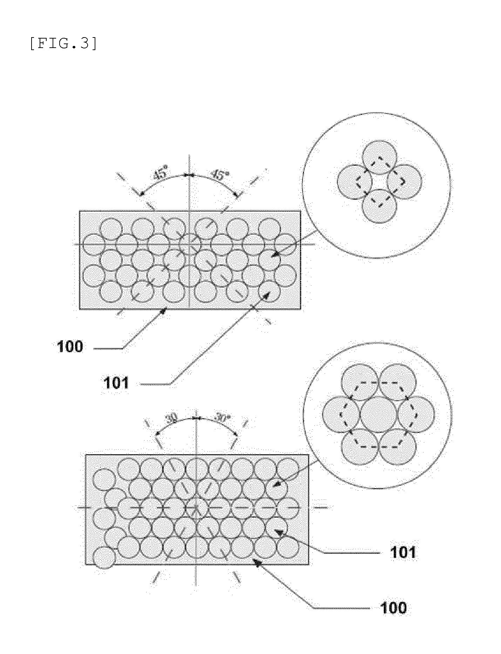

The exemplary embodiment of the present invention will be described below with reference FIGS. 3 to 7.

FIG. 3 is a plan view of an arrangement of the coating lens 101 that may be configured in the 3D lens film according to the exemplary embodiment of the present invention.

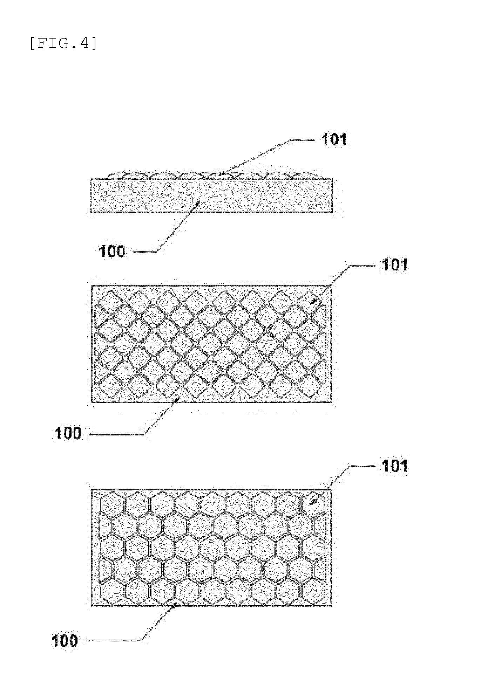

FIG. 4 is a cross-sectional view and a plan view of a shape of the coating lens 101 that may be configured in the 3D lens film according to the exemplary embodiment of the present invention.

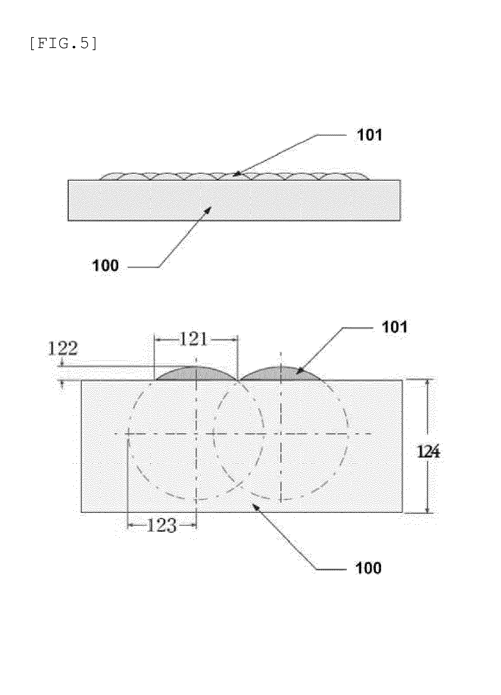

FIG. 5 is a cross-sectional view of a sectional standard of the coating lens 101 that may be configured in the 3D lens film according to the exemplary embodiment of the present invention.

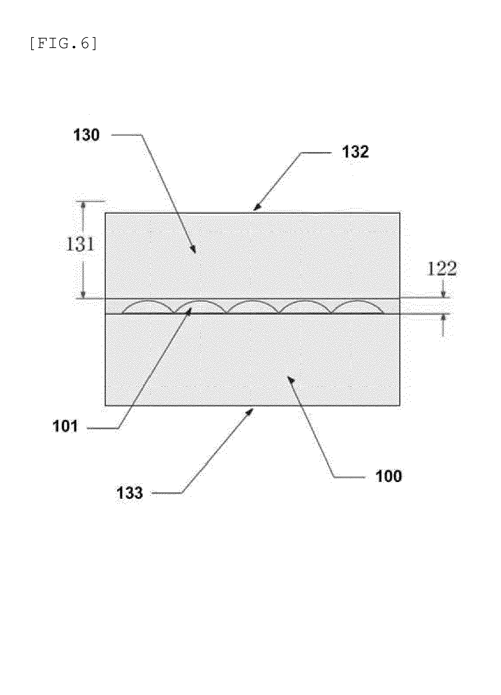

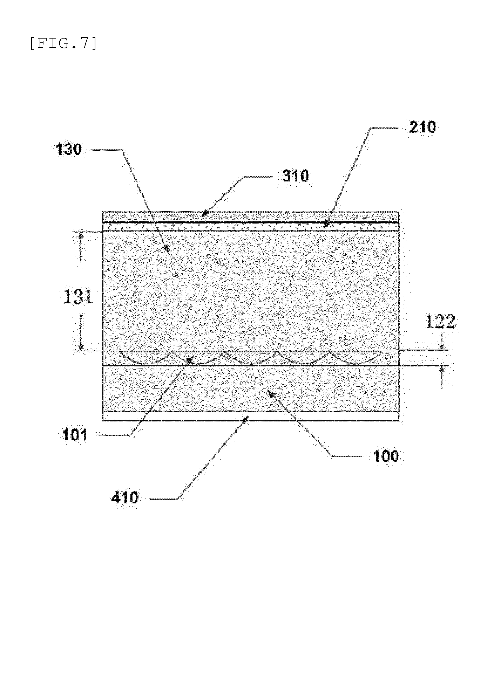

FIGS. 6 and 7 are cross-sectional views of a lamination of the 3D lens film according to the exemplary embodiment of the present invention.

A method for manufacturing a 3D lens film will be described below with reference to FIGS. 2 to 7 First, a copper plate having a plurality of lenses intaglio-patterned on one surface thereof is manufactured. In this case, the intaglio-patterned copper plate is manufactured using ferric chloride or copper chloride at 40°C to 50°C by wet etching.

A surface of the intaglio-patterned copper plate is coated with a transparent liquid resin coating agent that is kept at a viscosity of 10,000 to 12,000 Pa.s (kg/m.sec).

The liquid resin coating agent at portions other than a portion in which the plurality of intaglio-patterned lenses is disposed is removed in a state in which a doctor knife is kept at 40° to 45° with respect to the surface of the intaglio-patterned copper plate.

A coating lens film 100 is compressed on the surface of the intaglio-patterned copper plate by a roller type, such that the plurality of coating lenses 101 is formed on one surface of the coating lens film 100 at 10 to 900 [lpi] to correspond to the plurality of intaglio-patterned lenses. In this case, a side interval between the coating lenses 101 is 5 µm to 10 µm.

The 3D lens film according to the present invention may be manufactured by forming the coating lens 101 made of a transparent resin on the transparent coating lens film 100 to easily fit the 2D image, in which the coating lens 101 may be appropriately manufactured to have a diameter of 0.03 mm to 5 mm according to usage and if necessary, the coating lens 101 having a diameter larger and smaller than that may be manufactured.

Further, the shape of the coating lens 101 may be variously set as illustrated in FIG. 4 and the coating lens 101 may be manufactured to have a thickness of 0.02 mm to 5 mm or more by a lamination process to extend a selection range of a user while solving problems of the production method of the related art, such as a thickness of a PET film, a line number and a diameter of a lens, a material and a small-quantity production of a sheet film, a shape and an arrangement of a lens, and the like.

The virtual image is determined based on a diameter 121 and a thickness 122 of the coating lens 101 and a dot diameter and a contrast of an image according to the usage of the 3D lens film. In this case, for definition of the virtual image, a coating lens film thickness 124 as illustrated in FIG. 5 and a thickness of a transparent film 130 as illustrated in FIG. 6 are set and it is determined whether the lamination of the coating lens film 100 is made.

The exemplary embodiment of the present invention relates to the 3D lens film for converting a 2D image into a 3D image and adopts a gravure coating method to solve the problems of the 3D lens sheet film according to the related art as follows.
1) The 3D lens sheet film according to the related art as illustrated in FIG. 1 may obtain a 3D effect only when printing is directly performed on an opposite surface of the lens 20 to accurately fit a position of the lens 20, but the 3D lens film according to the exemplary embodiment of the present invention may adopt the gravure coating method to make post-processing free and perform duplex printing (an upper surface 132 and a lower surface 133 of a transparent film) and performs printing regardless of a position of a line of the coating lens 101, thereby extending a printing range, such as real printing, and the like.
2) Since the lens film 10 according to the related art uses a straight lens 20, the lens film 10 has directivity at the time of creating the 3D image, but the arrangement of the coating lens 101 of the 3D lens film according to the exemplary embodiment of the present invention does not have directivity as illustrated in FIGS. 3 and 4 and the shape of the coating lens 101 is also diversified to naturally create the 3D image suitable for more usages.
3) When a sheet of 120 [lpi] or more is manufactured by using an extrusion molding method at the time of manufacturing the lens film 10 according to the related art, the user selection may not be optionally available in terms of costs, extrusion time, and production, and the like and if necessary, the lens film 10 may be replaced with imported goods due to costs, but since the 3D lens film according to the exemplary embodiment of the present invention is manufactured by the gravure coating method, the 3D lens film of 120 [lpi] or more may be manufactured and the cost and time are remarkably reduced and if necessary, the selection of the thickness of the lens film 100 may be optimal and the lens film may be easily manufactured from 120 [lpi] to 900 [lpi].
4) The 3D lens sheet film according to the related art is difficult to obtain the 3D effect by being laminated with other printed matters, but the 3D lens film according to the exemplary embodiment of the present invention may adjust the thickness 122 and the diameter 121 of the coating lens 101 and the coating lens film thickness 124 to be laminated with other films and printed matters and may be adhesively coated together with a film and a transparent plate (film, acryl, glass, and the like) in response to the required specifications of products, thereby creating the 3D image.
5) The 3D lens sheet film according to the related art is difficult to perform the printing work and therefore has been used only in industries having specific facilities, but the 3D lens film according to the exemplary embodiment of the present invention may be manufactured to fit the product usage of a user by performing a consecutive working process of the lamination of the transparent film 130 and the lamination of an adhesive layer 210 and a release paper 310 so as to fit specification of various products in consideration of gravure characteristics, and when a dot image may be easily determined, a three-dimensional picture may be easily produced by using a printer, a computer, and the 3D lens film 100 according to the exemplary embodiment of the present invention.
6) As described above, the 3D lens film according to the exemplary embodiment of the present invention solves jobs that cannot be performed by the 3D lens sheet film according to the related art, that is, in order to be easily use the 3D image to an average user for marketing, such as packaging in a sign advertisement, such that the 3D lens can be economically utilized.

The 3D lens film according to the exemplary embodiment of the present invention does not have directivity and may configure the arrangement of the coating lens 101 to fit a printed image dot so that the 3D lens film may be applied to all the fields of 150 [lpi] to 175 [lpi] image printing methods that are currently widely used. In particular, the PET film may be freely produced to have a line number from 120 [lpi] to 300 [lpi] and may be produced to have a line number from 300 [lpi] to 900 [lpi], if necessary.

The technical spirit of the present invention is previously described with reference to the accompanying drawings, but describes, by way of example, the exemplary embodiments of the present invention and does not limit the present invention. Further, it is apparent that a person with ordinary skill in the art to which the present invention pertains can variously change and modify the exemplary embodiments of the present invention without departing from the technical spirit of the present invention.

## Claims

1. A method for manufacturing a 3D lens film, comprising:
a tenth process of manufacturing a copper plate having a plurality of lenses intaglio-patterned on one surface thereof;
a twelfth process of coating a transparent liquid resin coating agent on a surface of the intaglio-patterned copper plate;
a fourteenth process of removing a liquid resin coating agent at portions other than a portion in which the plurality of intaglio-patterned lenses is disposed; and
a sixteenth process of compressing a coating lens film 100 on a surface of the intaglio-patterned copper plate so that a plurality of coating lenses 101 is formed on one surface of the coating lens film 100 to correspond to the patterning.

2. The method of claim 1, wherein in the tenth process, the intaglio-patterned copper plate is manufactured using ferric chloride or copper chloride at 40°C to 50°C by wet etching.

3. The method of claim 1, wherein the liquid resin coating agent is kept at a viscosity of 10,000 to 12,000 Pa.s (kg/m.sec).

4. The method of claim 1, wherein in the fourteenth process, the liquid resin coating agent is removed in a state in which a doctor knife is kept at 40° to 45° with respect to a surface of the intaglio-patterned copper plate.

5. The method of claim 1, wherein in the sixteenth process, the coating lens film 100 is compressed on the surface of the copper plate by a roller type.

6. The method of claim 1, wherein in the sixteenth process, the plurality of coating lenses 101 is formed at 10 to 900 [lpi].

7. The method of claim 1, wherein a side interval between the coating lenses 101 is 5 µm to 10 µm.
